# EUROPEAN PATENT SPECIFICATION

(11) **EP 2 421 807 B1**
(45) Date of publication and mention of the grant of the patent: **15.08.2018**
(21) Application number: 10767358.4
(22) Date of filing: 23.04.2010
(51) Int. Cl.: C04B 35/584, C04B 35/591, C04B 35/65, C30B 11/00, C04B 35/64, B28B 7/44

(54) **METHOD FOR PREPARING OF CERAMIC SHAPED PART AND USE OF AN APPARATUS FOR PREPARING A CERAMIC SHAPED PART**
VERFAHREN ZUR HERSTELLUNG EINES KERAMIKFORMTEILS SOWIE VERWENDUNG EINER VORRICHTUNG ZUR HERSTELLUNG EINES KERAMIKFORMTEILS
PROCÉDÉ DE FABRICATION DE CORPS FAÇONNÉ CÉRAMIQUE ET UTILISATION D'UN APPAREIL POUR LA FABRICATION DE CORPS FAÇONNÉ CÉRAMIQUE

(30) Priority: 23.04.2009 NO 20091622
(43) Date of publication of application: 29.02.2012
(73) Proprietor: Saint-Gobain IndustrieKeramik Rödental GmbH, 96472 Rödental (DE)
(72) Inventor: SØRHEIM, Håvard, N-7052 Trondheim (NO); SOLHEIM, Arve, N-7091 Trondheim (NO)
(74) Representative: Lendvai, Tomas
(86) International application number: PCT/NO2010/000149
(87) International publication number: WO 2010/123379

(56) References cited:
- WO-A1-2004/016835
- JP-A- 2006 169 055
- JP-A- 2006 327 912
- US-A- 4 477 402
- US-A- 4 832 892
- US-A- 5 098 631
- US-A1- 2007 082 149
- US-A1- 2008 153 688
- US-A1- 2009 159 230

## Description

The present invention concerns a method for preparing of at least one ceramic shaped part and use of a cavity in an apparatus for preparing at least one ceramic shape part by said method.

### Description of prior art:

Regarding ceramic shaped parts, it is a problem today to produce shapes with the requested dimensions, especially large shaped parts, which can be recycled several times. Further, large ceramic shaped parts are required within several fields such as for example preparing of silicon ingots to the solar cell industry. Today, when preparing silicon ingots for further production of silicon wafers, shaped parts consisting of silica is used. At high temperatures, which are necessary when preparing silicon for solar cell purposes, shaped parts of silica, so-called silica crucibles, is exposed to temperatures up to 1500 °C. Silica crucibles soften at high temperatures such as 1500 °C. When cooling the silica crucibles to room temperature, crack formation arises which involve no recycling of the crucibles. In several production processes, crucibles which can only be used once, involve a substantial cost.

Several known techniques for preparing ceramic shaped parts involve different methods for moulding. In such processes a slicker/dispersion which is an aqueous composition of mainly the preferred powder and a suitable binding agent, is prepared. The slicker/dispersion can also be based on other liquids than water, such as ethanol and other alcohols. The slicker is poured into a casting mould (typical a plaster mould). The liquid of the slicker is extracted in the mould and the mould is dismantled after a while. A green body consisting of powder bounded by the binding agent is achieved. The green body is then prepared in several processes such as drying, removing of the binding agent and nitriding/sintering, before a desired product is achieved. The green body has low strength and thus can easily change shape and crack in further processing and handling. This is more critical when lager and more complicated shaped parts are prepared.

Pressure casting is another known technique. The basis is mainly a composition of powder, binding agent and some liquid. The composition is compressed by different methods to the desired shape, a green body. Compression of big and or complicated geometries are very difficult and today not solved technically. The green body possesses the same problems as mentioned above.

The nitriding of silicon to silicon nitride takes place at high temperatures, typical 1150-1400 degrees Celsius, according to the following reaction;

(1) 3 Si(s) + 2 N₂(g) = Si₃N₄(s)

The reaction is strongly exothermic and thus can cause overheated areas and hence the following escalating reaction. In such cases the probability of forming liquid silicon is huge. Liquid silicon will not be converted into silicon nitride, and thus results in a weakening of the material. This is a well known problem when preparing silicon nitride, and is especially difficult to avoid when preparing large shaped parts.

The American patent US 4,832,892 discloses an assembly for the preparation of ceramic composite structures, such as the oxide of aluminium, by oxidizing the parent metal in the presence of an oxidant to a reaction temperature to form a body of molten metal which reacts with the oxidant. US 4,832,892 is not concerned with the formation of shaped parts of a reaction bonded silicon nitride, a nitride bonded silicon carbide or a nitride bonded silicon nitride.

The American patent US 4,477,402 discloses a method of making a heat fused silica nitride comprising object. To this end, the series of measured powder shots are containerized to be carried in the container between the nitriding and heat fusing steps. The containerization comprises lining the internal wall of the graphite sleeve, treated for inertness, with a refractory metal foil essentially impervious to migration of carbon. A series of measured shots of a powder mixture of silicon and oxygen carrying agent is inserted into the assembly each shot being separated by an inert spacer. The assembly is subjected to a nitriding treatment and subsequently hot pressed or sintered. There is no mention of a perforation of the shape portions in order to obtain a uniform reactive gas atmosphere.

The present invention is intended to solve or at least facilitate the problems identified above. Particularly, an object of the invention is to provide a method well suitable for preparing ceramic shaped parts for use when preparing silicon ingots for the solar cell industry. Further, it is an object of the present invention to provide a method in which said ceramic shaped part can be recycled several times. Problems such as deforming and cracking of the prepared ceramic shaped part are avoided in the present invention. Further, no binding agent or liquid is used in the present invention, and thus there is no need for an extra process step to dry and remove the binding agent. It is also used a shape which equalizes the temperature of the ceramic shaped part during the nitriding process which by that means will minimize the probability of forming liquid silicon. Compared with prior art in the field the present invention represents a method which is simplified, which is suitable for preparing of large shaped parts, which consist of fewer process steps, which avoid deformation and which is economical favourable.

The present invention provides a method for preparing of at least one ceramic shaped part according to claim 1, comprising
- a cavity is provided between at least one external shape and at least one internal shape,
- a Si-containing powder composition is placed in the cavity,
- the Si-powder composition is heated in a reactive gas atmosphere to a temperature in which a reaction bounded ceramic shaped part is obtained.

Further, it shall be mentioned that at least one of the external shapes are perforated and also at least one of the internal shapes are perforated. Perforated shapes result in a relatively uniform reactive gas atmosphere. Further, the reaction for preparing of the reaction bonded ceramic shaped part will take place quickly on the basis of the perforated shapes which ensure supply of the desired gas atmosphere. The internal shapes according to the invention are separated from each other by inserting of a thermal resistant deformable material in which the thermal resistant deformable material is chosen from graphite felt, graphite wool or graphite bar. The cavity provided between at least the external- and internal shape as mentioned above is coated with a slurry prior to providing the cavity. A foil is applied according to the invention between at least one external shape and said slurry prior to coating with the slurry. Further, a foil is applied between at least one internal shape and said slurry prior to coating with the slurry. A temperature resistant perforated foil is applied prior to coating with the slurry. Said slurry comprises a powder containing silicon nitride of particle size ≤ 100 µ, ≤ 80µ, ≤ 60 µ, ≤ 40 µ, ≤ 20 µ, ≤ 10 µ, ≤ 5 µ og ≤ 1 µ.

The mentioned Si-containing powder composition according to the present invention comprises silicon, silicon and silicon carbide or silicon and silicon nitride. The reactive gas atmosphere is nitrogen atmosphere. At least one external shape and at least one internal shape according to the invention comprise a graphite containing material.

Further, the present invention deals with the use of an apparatus
for preparing at least one
ceramic shaped part comprising:
at least a cavity between at least one external shape and at least one internal shape,
means for inserting of a Si-containing powder composition,
means for heating in nitrogen atmosphere.

The apparatus comprises at least one of the external- and internal shapes which are
perforated. Further, it is as mentioned desirable to provide
apparatus which can be exposed to thermal stress and at the same time maintain the original dimensions and also avoid crack formation. In relation to this it shall further be mentioned that the apparatus as described
in the preceding where at least the internal shape possess a thermal expansion coefficient which is higher than the thermal expansion coefficient of a reaction bounded ceramic shaped part, and at least the external shape possess a thermal expansion coefficient lower than of the reaction bounded ceramic shaped part. In the instance in which an internal shape is used with thermal expansion coefficient lower than the reaction bounded ceramic shaped part, shall a thermal resistant deformable material separate at least two internal shapes. The thermal resistant deformable material is chosen from graphite felt, graphite wool or graphite bar.

Further, the use according to the present invention comprises
use of a cavity provided between at least
one external shape and at least one internal shape, wherein a Si-containing powder composition is provided in the cavity previous of heating the powder composition in nitrogen atmosphere to a temperature in which a ceramic shaped part is prepared. Said cavity is coated with a silicon nitride containing slurry prior to providing the cavity. A foil is used between at least one external shape and said slurry prior to coating with the slurry. Further, a foil is used between at least one internal shape and said slurry prior to coating with the slurry. The foil consists of a temperature resistant perforated foil. The use of the present invention takes place in nitrogen atmosphere.

### Description of the figures.

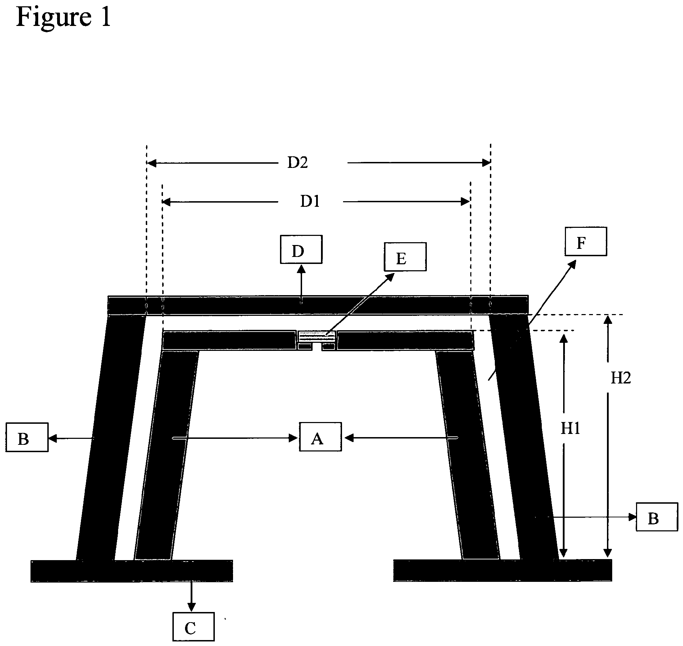

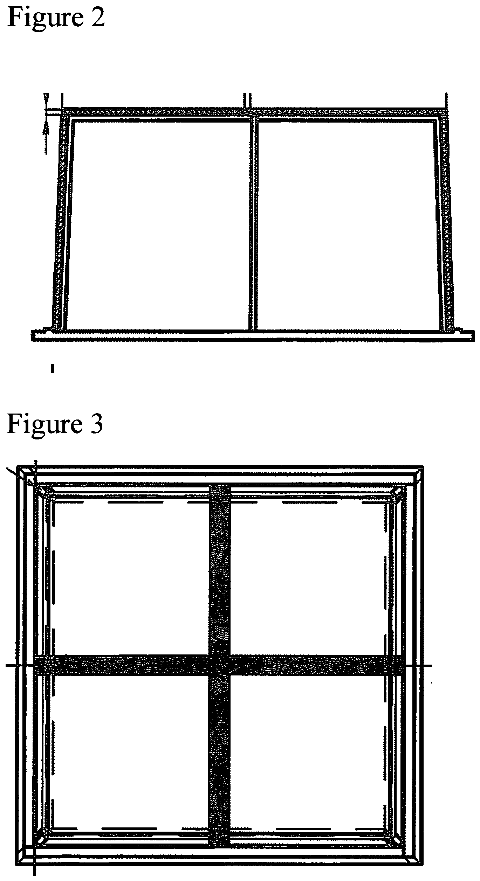

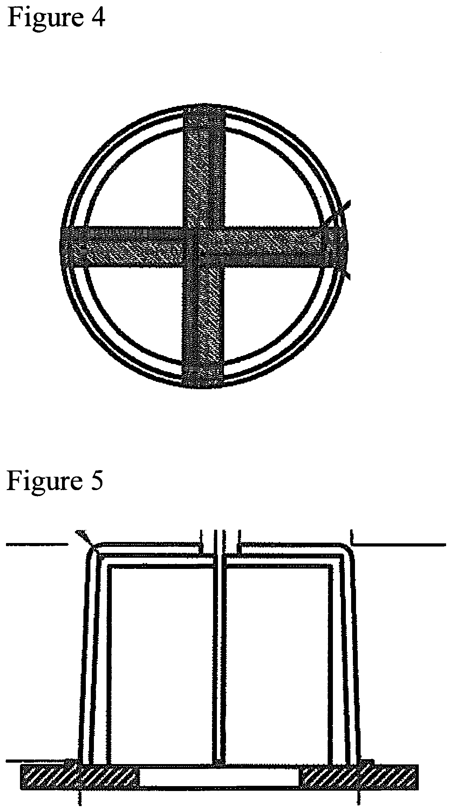

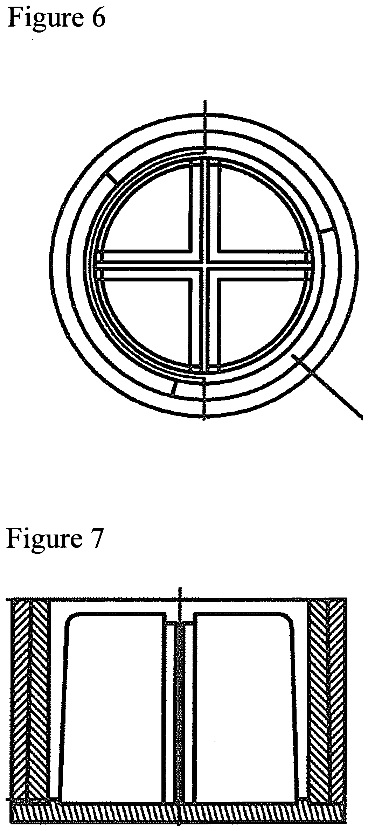

The shaping of at least one ceramic shaped part depends on the object and the use of the ceramic shaped part. In preparing of silicon ingots to the solar cell industry the shaping will often be in the form of square or rectangular shaped parts. Figure 1 shows a cross-section of composed shape of different parts. In figure 2 a cross-section seen from the side of a square shape is shown. Figur 3 shows a cross-section of a square shape seen from above. Figures 4 and 6 respectively show a circular internal shape and also a circular complete shape seen from above. Figures 5 and 7 shows a cross-section of a circular internal and external shape.

### Example 1:

A shape composed of different parts of graphite containing material was used in the example. The shape consisted of an internal shape (A), an external shape (B), a basis plate (bottomplate) (C) and a plate (D) as shown in figure 1. The graphite containing parts was perforated, except the basis plate. The internal shape comprising four relatively similar graphite containing parts were fastened to each other and to the basis plate. Said parts were fastened to each other with suitable fixing devices in the form of i.a. screws. In a distance between the internal shaped parts a thermal resistant deformable material (E) in the form of graphite bar, graphite felt or graphite wool were applied. Perforated graphite foil was applied at the internal graphite containing shapes. The perforations of the foil shall preferably not coincide with the perforations of the graphite containing parts. The external shapes consisted of four relatively similar graphite containing plates. Perforated graphite foil was applied at the external graphite containing shapes. The surfaces coated with graphite foil were further coated with a silicon nitride containing slurry. The slurry dried at room temperature. The external graphite containing shapes was assembled at the basis plate (figure 1). Further, said external graphite containing parts were fastened above the internal shape and to the basis plate. Silicon containing powder, with the preferred size within one or several ranges is as follows: <10 micron, <20 micron, <40 micron, <60 micron, <75 micron, <100 micron, <120 micron, <150 micron, <180 micron, <200 micron, was placed in the provided cavity (figure 1, F) between the internal- and external shape. Further, the silicon containing powder was compacted by vibration. Silicon containing powder in the size ranges as described above were in the end placed in the upper area of said cavity. The powder was further compacted by vibration and mechanical compaction. The shapes mounted rigidly were in this example turned around 180 degrees as shown in figure 1. Further the basis plate was disassembled. The shapes mounted rigidly were placed in a furnace with nitrogen atmosphere. The furnace was quickly heated up to 1100-1200°C, and further slowly heated to 1400-1500°C during 40-60 hours. The shapes mounted were then cooled down to room temperature. The whole furnace cycle (i.e. heating, preparing of at least one ceramic shaped part and cooling down) took place in a time interval of 60-90 hours with starting point in cold mounted shapes, via shapes heated to 1400-1500°C, to in the end cooled/cold mounted shapes. Said mentioned shapes was taken out of the furnace after cooling down. The external- and internal graphite containing shapes were disassembled, and a reaction bounded silicon nitride shaped part/ceramic shaped part with the same dimension as the cavity between the external- and internal graphite containing shapes were provided. Possible remaning slurry from the graphite containing shapes at the ceramic shaped part can in a simple manner be removed with dry ice blasting (tørrisblåsing) or mechanical rubbing /finishing. The graphite containing parts was cleaned with a cleaning cloth and were then ready for re-use.

### Example 2:

In example 2 the same procedure as in example 1 was used with exception of the powder composition. In this example, a powder composition comprising silicon (70 weight%, <150 micron) and silicon carbide (30 weight%, <150 micron) was used. After disassembling of the graphitic parts, a nitride bounded silicon carbide-shaped part was provided.

### Example 3:

I example 3 the method as described in example 1 was used with the exception of the powder composition. In the present example a powder composition comprising silicon (70 weight%, <150 micron) and silicon nitride (30 weight%, <10 micron) were chosen. After disassembling of the graphite containing parts, a nitride bounded silicon nitride-shaped part was provided.

In the previous preferred embodiments of the invention have been described it will be obvious for person skilled in the art that other embodiments including the concepts can be used. These and other examples according to the invention illustrated above are only shown as examples and the scope of the invention is described in the following claims.

## Claims

1. Method for preparing of at least one ceramic shaped part from a Si-containing powder composition comprising silicon, silicon and silicon carbide or silicon and silicon nitride
**characterized in that**,
- a cavity is provided between at least one external shape and at least one internal shape,
- at least one of the external shape and at least one of the internal shape is perforated,
- a Si-containing powder composition is placed in the cavity,
- the Si-containing powder composition is heated in a nitrogen atmosphere to a temperature in which a reaction bonded silicon nitride shape part, a nitride bonded silicon carbide-shaped part and/or a nitride bonded silicon nitride -shaped part is obtained.

2. Method according to claim 1, wherein at least two internal shapes are separated from each other by inserting a thermal resistant deformable material.

3. Method according to claim 2, wherein the thermal resistant deformable material is chosen from at least one of the following: graphite felt, graphite wool, graphite bar.

4. Method according to one of the claims 2 to 3, wherein a temperature resistant perforated foil is applied to at least one external shape and coated with a silicon nitride slurry.

5. Method according to one of the claims 2 to 4, wherein a temperature resistant perforated foil is applied to at least one internal shape and coated with a silicon nitride slurry.

6. Method according to claim 4 or 5, wherein the slurry comprises a powder containing silicon nitride.

7. Method according to one of the claims 1 to 6, wherein the Si-containing powder composition is silicon.

8. Method according to one of the claims 1 to 7, wherein at least one external shape and at least one internal shape comprise a graphite containing material.

9. Use of a cavity in an apparatus for preparing at least one ceramic shape part by the method according to one of the claims 1 to 8 comprising:
at least a cavity between at least one external shape and at least one internal shape;
at least one of the external and one of the internal shapes are perforated;
means for inserting of a Si-containing powder composition;
means for heating in a nitrogen atmosphere, wherein a Si-containing powder composition is provided in the cavity previous of heating the powder composition in a nitrogen atmosphere to a temperature in which a ceramic shape part is prepared.

10. Use according to claim 9, of a slurry comprising a powder containing silicon nitride.

## Patentansprüche

1. Verfahren zur Herstellung mindestens eines keramischen Formteils aus einer Si-haltigen Pulverzusammensetzung umfassend Silizium, Silizium und Siliziumcarbid oder Silizium und Siliziumnitrid, **dadurch gekennzeichnet, dass**
- zwischen mindestens einer äußeren Form und mindestens einer inneren Form ein Hohlraum bereitgestellt wird,
- mindestens eine äußere Form und mindestens eine innere Form perforiert ist,
- eine Si-haltige Pulverzusammensetzung in den Hohlraum eingebracht wird,
- die Si-haltige Pulverzusammensetzung in einer Stickstoffatmosphäre auf eine Temperatur erhitzt wird, bei der ein reaktionsgebundenes Siliziumnitridformteil, ein nitridgebundenes Siliziumcarbidformteil und/oder ein nitridgebundenes Siliziumnitridformteil erhalten wird.

2. Verfahren nach Anspruch 1, wobei mindestens zwei innere Formen durch Einfügen eines wärmebeständigen verformbaren Materials voneinander getrennt werden.

3. Verfahren nach Anspruch 2, wobei das wärmebeständige verformbare Material ausgewählt ist aus mindestens einem der folgenden: Graphitfilz, Graphitwolle, Graphitstab.

4. Verfahren nach einem der Ansprüche 2 bis 3, wobei eine temperaturbeständige perforierte Folie auf mindestens einer äußeren Form aufgebracht und mit einer Siliziumnitridaufschlämmung beschichtet wird.

5. Verfahren nach einem der Ansprüche 2 bis 4, wobei eine temperaturbeständige perforierte Folie auf mindestens einer inneren Form aufgebracht und mit einer Siliziumnitridaufschlämmung beschichtet wird.

6. Verfahren nach Anspruch 4 oder 5, wobei die Aufschlämmung ein siliziumnitridhaltiges Pulver umfasst.

7. Verfahren nach einem der Ansprüche 1 bis 6, wobei die Si-haltige Pulverzusammensetzung Silizium ist.

8. Verfahren nach einem der Ansprüche 1 bis 7, wobei mindestens eine äußere Form und mindestens eine innere Form ein graphithaltiges Material umfassen.

9. Verwendung eines Hohlraums in einer Apparatur zur Herstellung mindestens eines keramischen Formteils mittels des Verfahrens gemäß einem der Ansprüche 1 bis 8 umfassend:
mindestens einen Hohlraum zwischen mindestens einer äußeren Form und
mindestens einer inneren Form;
mindestens eine der inneren und eine der äußeren Formen sind perforiert;
Mittel zur Einbringung einer Si-haltigen Pulverzusammensetzung;
Mittel zur Erwärmung in einer Stickstoffatmosphäre, wobei vor der Erwärmung der Pulverzusammensetzung in einer Stickstoffatmosphäre auf eine Temperatur in der ein keramisches Formteil hergestellt wird, eine Si-haltige Pulverzusammensetzung in den Hohlraum eingebracht wird.

10. Verwendung gemäß Anspruch 9, einer Aufschlämmung, die ein siliziumnitridhaltiges Pulver umfasst.

## Revendications

1. Procédé de préparation d'au moins une pièce façonnée céramique à partir d'une composition de poudre contenant Si comprenant du silicium, du silicium et du carbure de silicium ou du silicium et du nitrure de silicium,
**caractérisé par le fait que**
- une cavité est formée entre au moins une forme externe et au moins une forme interne,
- au moins l'une de la ou des formes externes et au moins l'une de la ou des formes internes sont perforées,
- une composition de poudre contenant Si est placée dans la cavité,
- la composition de poudre contenant Si est chauffée dans une atmosphère d'azote à une température à laquelle un corps façonné de nitrure de silicium lié par réaction, un corps façonné de carbure de silicium lié par nitrure et/ou un corps façonné de nitrure de silicium lié par nitrure est obtenu.

2. Procédé selon la revendication 1, dans lequel au moins deux formes internes sont séparées l'une de l'autre par introduction d'un matériau déformable thermorésistant.

3. Procédé selon la revendication 2, dans lequel le matériau déformable thermorésistant est choisi parmi au moins l'un des éléments suivants : feutre de graphite, laine de graphite, barre de graphite.

4. Procédé selon l'une des revendications 2 et 3, dans lequel une feuille perforée résistante à la température est appliquée sur au moins une forme externe et revêtue d'une bouillie de nitrure de silicium.

5. Procédé selon l'une des revendications 2 à 4, dans lequel une feuille perforée résistante à la température est appliquée sur au moins une forme interne et revêtue d'une bouillie de nitrure de silicium.

6. Procédé selon l'une des revendications 4 ou 5, dans lequel la bouillie comprend une poudre contenant du nitrure de silicium.

7. Procédé selon l'une des revendications 1 à 6, dans lequel la composition de poudre contenant Si est le silicium.

8. Procédé selon l'une des revendications 1 à 7, dans lequel au moins une forme externe et au moins une forme interne comprennent un matériau contenant du graphite.

9. Utilisation d'une cavité dans un appareil pour préparer au moins un corps façonné céramique par le procédé selon l'une des revendications 1 à 8, comprenant :
au moins une cavité entre au moins une forme externe et au moins une forme interne ;
au moins l'une de la ou des formes externes et au moins l'une de la ou des formes internes sont perforées ;
des moyens d'introduction d'une composition de poudre contenant Si ;
des moyens de chauffage dans une atmosphère d'azote, une composition de poudre contenant Si étant disposée dans la cavité avant le chauffage de la composition de poudre dans une atmosphère d'azote à une température à laquelle un corps façonné céramique est préparé.

10. Utilisation selon la revendication 9 d'une bouillie comprenant une poudre contenant du nitrure de silicium.
